(19) Europäisches Patentamt
European Patent Office
Office européen des brevets

(11) **EP 0 649 575 B1**

(12) **EUROPÄISCHE PATENTSCHRIFT**

(45) Veröffentlichungstag und Bekanntmachung des Hinweises auf die Patenterteilung:
**08.07.1998 Patentblatt 1998/28**

(51) Int Cl.6: **H02H 7/085**

(86) Internationale Anmeldenummer:
**PCT/DE94/00420**

(21) Anmeldenummer: **94912460.6**

(22) Anmeldetag: **16.04.1994**

(87) Internationale Veröffentlichungsnummer:
**WO 94/27349 (24.11.1994 Gazette 1994/26)**

(54) **ELEKTROMOTORISCHER ANTRIEB**

ELECTRIC MOTOR DRIVE

COMMANDE ASSUREE PAR MOTEUR ELECTRIQUE

(84) Benannte Vertragsstaaten:
**DE ES FR GB IT**

(30) Priorität: **07.05.1993 DE 4315182**

(43) Veröffentlichungstag der Anmeldung:
**26.04.1995 Patentblatt 1995/17**

(73) Patentinhaber: **ROBERT BOSCH GMBH**
**70442 Stuttgart (DE)**

(72) Erfinder: **SCHOEFFLER, Gerhard**
**D-76530 Baden-Baden (DE)**

(56) Entgegenhaltungen:
**DE-A- 3 608 555**

- **PATENT ABSTRACTS OF JAPAN vol. 7, no. 110 (M-214) (1255) 13. Mai 1983 & JP,A,58 030 851 (ICHIKO KOGYO) 23. Februar 1983**
- **PATENT ABSTRACTS OF JAPAN vol. 6, no. 21 (E-93) (899) 6. Februar 1982 & JP,A,56 139 093 (MATSUSHITA) 30. Oktober 1981**

## Beschreibung

Stand der Technik

Die Erfindung geht aus von einem elektromotorischen Antrieb nach der Gattung des Hauptanspruchs. Elektromotorische Antriebe enthalten häufig einen Überlastungsschutz zur Vermeidung irreparabler thermischer Beschädigungen des Elektromotors, die bei einer plötzlich auftretenden Schwergängigkeit eines zu bewegenden Teiles oder bei auftretenden Hindernissen in der Verstellbahn auftreten könnten. Ein elektromotorischer Antrieb mit den Merkmalen des Oberbegriffs des Anspruchs 1 ist aus der DE-A-3 608 555 bekannt geworden.

Ein Schutz gegen thermische Überlastung ist beispielsweise mit einem an der Motorwicklung thermisch angekoppelten Temperaturfühler realisierbar, dessen Schaltkonatkt im Motorstromkreis liegt. Eine andere Möglichkeit zur Realisierung eines Überlastschutzes ist die Überwachung der Drehzahl des Elektromotors oder der Drehzahl von Getriebeelementen. Eine Überlastung wird angenommen, wenn eine vorgegebene Mindestdrehzahl unterschritten wird.

Der Erfindung liegt die Aufgabe zugrunde, einen elektromotorischen Antrieb mit einem Überlastungsschutz anzugeben, der insbesondere zur Verwendung bei Verstellantrieben geeignet ist, die eine Eingabe zum Vorgeben einer Sollposition eines bewegbaren Teils enthalten.

Die Aufgabe wird durch die im Hauptanspruch angegebenen Merkmale gelöst.

Vorteile der Erfindung

Der erfindungsgemäße elektromotorische Antrieb weist den Vorteil auf, daß das vom Antrieb bewegbare Teil nach dem Ansprechen des Überlastschutzes eine vorgebbare Ruheposition anfahren kann und daß der Elektromotor erst nach Erreichen der Ruheposition abschaltbar ist. Mit dieser Maßnahme wird das Auftreten von möglichen Folgeschäden verhindert. Der erfindungsgemäße elektromotorische Antrieb ist geeignet zur Verwendung bei Verstellantrieben, die insbesondere in Kraftfahrzeugen angeordnet sind. Beispiele derartiger Verstellantriebe in Kraftfahrzeugen sind ein Schiebe-/Hebedach, eine Sitzverstellung, eine Spiegelverstellung, ein Fensterheber oder dergleichen. Nach dem Ansprechen des Überlastschutzes bei diesen elektromotorischen Antrieben ist sichergestellt, daß beispielsweise das Schiebe-/Hebedach oder beispielsweise das Fenster in die geschlossene Position gebracht werden.

Vorteilhafte Weiterbildungen und Ausgestaltungen des elektromotorischen Antriebs ergeben sich aus Unteransprüchen.

In einer ersten Ausgestaltung ist vorgesehen, daß der Überlastungsschutz eine Drehzahl des Antriebs auswertet.

In einer anderen Ausgestaltung ist vorgesehen, daß der Überlastschutz auf die Motortemperatur anspricht. Eine erste Alternative sieht den Einsatz eines Temperatursensors vor. Eine zweite Alternative sieht vor, daß der elektrische Widerstand der Ankerwicklung in einer Motorbetriebspause ermittelt wird, der temperaturabhängig ist. Eine besonders vorteilhafte Alternative sieht vor, daß während der Einschaltdauer des Elektromotors dessen Verlustleistung oder einer zu dieser proportionalen Größe anhand gemessener Motordaten berechnet und integriert wird und daß das Ergebnis der Integration mit einem vorgegebenen Schwellwert verglichen wird. Der Vorteil der letzten Alternative liegt darin, daß keine Sensoren sondern lediglich ohnehin bekannte Motordaten und Betriebsdaten zur Ermittlung des Überlastfalls verwendet werden.

Weitere Vorteilhafte Weiterbildungen und Verbesserungen des erfindungsgemäßen elektromotorischen Antriebs ergeben sich aus weiteren Unteransprüchen in Verbindung mit der folgenden Beschreibung.

Zeichnung

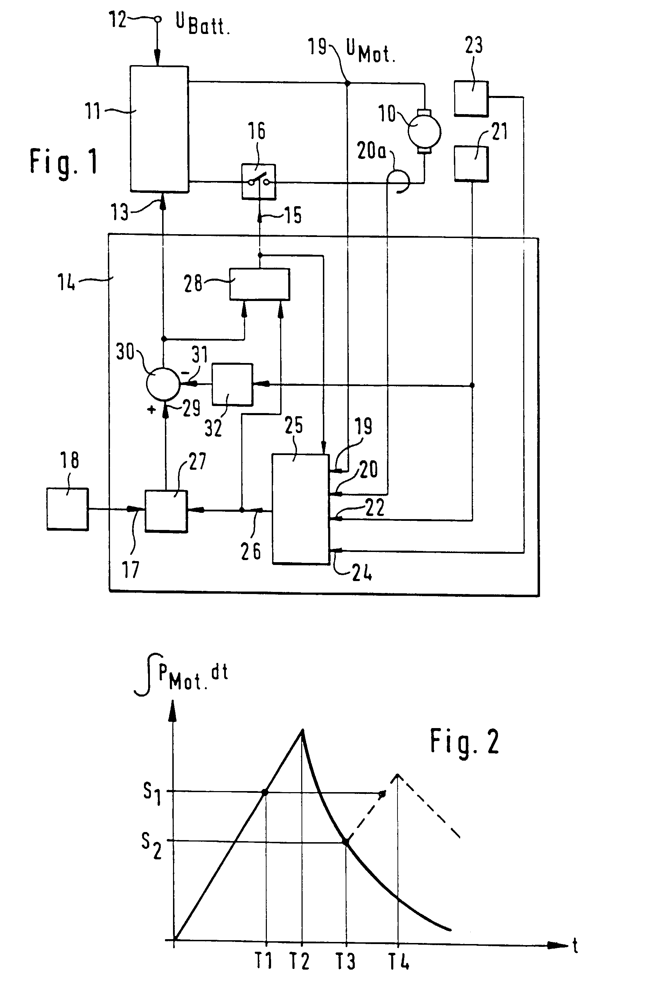

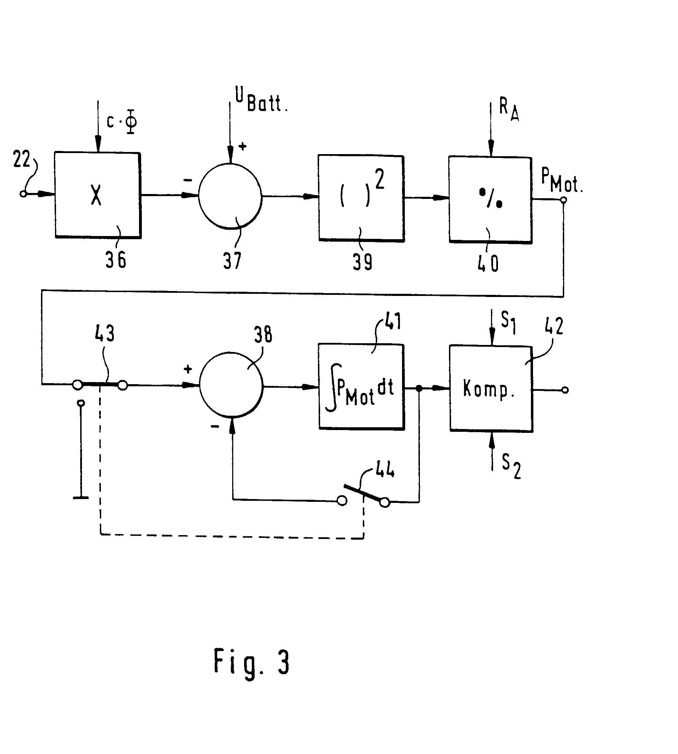

Figur 1 zeigt ein Blockschaltbild eines erfindungsgemäßen elektromotorischen Antriebs, Figur 2 zeigt einen Signalverlauf innerhalb eines Überlastschutzes des elektromotorischen Antriebs und Figur 3 zeigt ein Blockschaltbild einer Ausgestaltung eines Überlastschutzes.

Figur 1 zeigt einen Elektromotor 10, der ein nicht näher gezeigtes bewegbares Teil innerhalb eines elektromotorischen Antriebs antreibt. Der Elektromotor 10 ist an einer Endstufe 11 angeschlossen, die nicht näher bezeichnete Schaltmittel enthält, die einen Linkslauf und einen Rechtslauf des Elektromotors 10 ermöglichen. Die Endstufe 11 ist mit einer Energiequelle 12, $U_{Batt}$ verbunden, welche die elektrische Energie zum Betreiben des Elektromotors 10 bereitstellt. Der Endstufe 11 ist ein Steuersignal 13 zugeführt, das eine signalverarbeitende Anordnung 14 abgibt. Die Anordnung 14 gibt weiterhin ein Abschaltsignal 15 an eine im Motorkreis angeordnete Abschaltvorrichtung 16 ab. Zugeführt erhält die signalverarbeitende Anordnung 14 ein von einer Eingabe 18 abgegebenes Sollpositionssignal 17, ein Motorspannungssignal 19, $U_{Mot}$, ein Motorstromsignal 20, ein von einem Drehzahlgeber 21 abgegebenes Drehzahlsignal 22 und ein von einem Temperaturfühler 23 abgegebenes Temperatursignal 24.

Das Motorspannungssignal 19, das Motorstromsignal 20, das Drehzahlsignal 22 und das Temperatursignal 24 gelangt jeweils an eine Überlastermittlung 25, die ein Überlastsignal 26 an eine Sollpositionsvorgabe 27 und an eine Abschaltsignalermittlung 28 abgibt.

Die Sollpositionsvorgabe 27 erhält das Sollpositionssignal 17 zugeleitet. Ein von der Sollpositionsvorgabe 27 abgegebenes Sollpositionssignal 29 gelangt an einen Summierer 30, der weiterhin ein Istpositionssignal 31 zugeleitet erhält, das eine Positionsermittlung 32 in Abhängigkeit vom Drehzahlsignal 22 ermittelt. Das Steuersignal 13 wird vom Summierer 30 abgegeben.

Die Abschaltsignalermittlung 28 gibt das Abschaltsignal 15 ab. Die Abschaltsignalermittlung 28 erhält außer dem Überlastsignal 26 noch das Steuersignal 13 zugeleitet.

Der erfindungsgemäße elektromotorische Antrieb wird anhand des in Figur 1 gezeigten Blockschaltbilds näher erläutert:

Der erfindungsgemäße elektromotorische Antrieb ist beispielsweise als Verstellantrieb für ein bewegbares Teil vorgesehen, das vorzugsweise in einem Kraftfahrzeug angeordnet ist. Als Energiequelle 12 ist die Kraftfahrzeugbatterie $U_{Batt}$ vorgesehen. Der am Bordnetz des Kraftfahrzeugs betriebene Elektromotor 10 ist beispielsweise als Kommutatormotor ausgebildet, der von der signalverarbeitenden Anordnung 14, vorzugsweise einem Mikrocomputer, über die Endstufe 11 angesteuert wird. Eine Sollposition des bewegbaren Teils ist über die Eingabe 18 der signalverarbeitenden Anordnung 14 vorgebbar. Als Eingabe 18 ist beispielsweise ein Proportionalgeber vorgesehen, der einen unmittelbaren Bezug zur einzunehmenden Sollposition des bewegbaren Teils erkennen läßt. Anstelle eines derartigen Proportionalgebers ist auch eine Eingabe 18 mit Tipptastenfunktion vorsehbar. Der Elektromotor 10 wird in der Richtung in Bewegung gesetzt, die durch die jeweilige Tipptaste vorgegeben ist. Die Bewegung wird im allgemeinen so lange aufrechterhalten, bis die Tipptaste losgelassen wird. Wesentlich für die Erfindung ist, daß eine Sollposition des bewegbaren Teils wenigstens näherungsweise vorgebbar ist, wobei die Position des bewegbaren Teils entweder lediglich gesteuert oder auch geregelt sein kann. Bei dem in Figur 1 gezeigten Blockschaltbild ist der weitestgehende Ausbau des elektromotorischen Antriebs innerhalb einer Regelung gezeigt. Das von der Sollpositionsvorgabe 27 abgegebene Sollpositionssignal 29 wird im Summierer 30 mit dem von der Istpositionsermittlung 32 abgegebenen Istpositionssignal 31 verglichen. Bei einer Abweichung zwischen Soll- und Istsignal wird ein entsprechendes Steuersignal 13 an die Endstufe 11 abgegeben, das den Elektromotor 10 zum Bewegen des Teils veranlaßt, bis die Regelabweichung zu Null geworden ist. Die Istpositionsermittlung 32 ermittelt die Position des bewegbaren Teils beispielsweise aus dem vom Drehzahlgeber abgegebenen Drehzahlsignal 22, wobei auf die Gewinnung eines Referenzsignals hier nicht näher eingegangen wird.

Die Überlastermittlung 25 ermittelt eine Überlastung des Elektromotors 10 beispielsweise in Abhängigkeit von dem Drehzahlsignal 22 durch Vergleich mit einer vorgegebenen Mindestdrehzahl. In einer anderen Ausgestaltung, die gegebenenfalls zusätzlich vorgesehen sein kann, ermittelt die Überlastermittlung 22 eine Überlastung des Elektromotors 10 aus dem vom Temperaturfühler 23 abgegebenen Temperatursignal 24. Der Temperaturfühler 23 ermittelt beispielsweise die Motorwicklungstemperatur oder zumindest eine am Elektromotor 10 auftretende Temperatur, die representativ für die Motorbelastung ist. Das Temperatursignal 24 wird mit einer vorgegebenen Grenztemperatur verglichen. In anderen Ausgestaltungen werden die Motorbetriebsspannung und/oder das vom Motorstromsensor 20a erfaßte Motorstromsignal 20 zur Ermittlung der Überlastung des Elektromotors 10 herangezogen. Besonders vorteilhafte Realisierungen dieser Ermittlungen der Überlastung werden weiter unten anhand der Figuren 2 und 3 näher erläutert.

Stellt die Überlastermittlung 25 eine Überlastung fest, so gibt sie das Überlastsignal 26 aus. Das Überlastsignal 26 bewirkt zunächst, daß die vom Benutzer des elektromotorischen Antriebs vorgegebene Sollposition geändert wird. Die Sollpositionsvorgabe 27 wird veranlaßt, eine Ruheposition für das bewegbare Teil vorzugeben, die das bewegbare Teil vor dem endgültigen Abschalten des Elektromotors 10 einnehmen soll. Bei einem Fensterheber oder beispielsweise bei einem Schiebe-/Hebedach sind dies die Positionen, bei denen die Öffnungen verschlossen sind. Bei anderen Verstellantrieben wie beispielsweise bei Sitzverstellungen oder bei Spiegelverstellungen sind die Ruhepositionen vorzugsweise mittlere Positionen. Das Überlastsignal 26, das auch der Abschaltsignalermittlung 28 zugeleitet ist, führt erst dann zu einer Abschaltung des Elektromotors 10 über die Abschaltvorrichtung 16, wenn aus dem Steuersignal 13 ableitbar ist, daß das bewegbare Teil die vorgegebene Ruheposition erreicht hat. Anstelle der in Figur 1 gezeigten Regelung ist eine einfachere Ausführung denkbar, bei der die Position des bewegbaren Teils als Zählergebnis eines Zählers vorliegt. Anstelle der Sollpositionsänderung durch das Überlastsignal 26 wird in dieser einfachen Ausgestaltung die Endstufe 11 so lange angesteuert, bis der Zählerzustand einen vorgegebenen Wert, beispielsweise den Wert Null erreicht hat, der der Ruheposition entspricht.

In einer noch einfacheren Ausgestaltung entfällt sogar die Istpositionsermittlung aus dem Drehzahlsignal 22. In dieser einfacheren Ausgestaltung ist die Ruheposition beispielsweise dadurch gegeben, daß das bewegbare Teil gegen einen mechanischen Anschlag drückt, wobei ein erhöhter Motorstrom auftritt, der vom Motorstromsensor 20a erfaßt wird. Die Istpositionsermittlung 32 ermittelt in diesem Ausführungsbeispiel aus dem Motorstromsignal 20 das Erreichen der Ruheposition durch Vergleich des Motorstromsignals 20 mit einem vorgegebenen Grenzwert.

Die in Figur 1 gezeigte Abschaltvorrichtung 16 im Motorstromkreis ist lediglich beispielhaft gezeigt. In alternativen Ausgestaltungen ist es möglich, die Endstufe 11 über das Steuersignal 13 stillzulegen.

Eine alternative Ausgestaltung der Überlastermittlung, auf die bereits hingewiesen wurde, sieht vor, daß während der Einschaltdauer des Elektromotors 10 dessen Verlustleistung $P_{Mot}$ oder eine zu dieser proportionale Größe anhand geeigneter Motordaten berechnet und integriert wird. Sobald der Integrationswert einen vorgegebenen Schwellwert erreicht oder übersteigt, wird das Überlastsignal 26 ausgegeben. Zur Berechnung der Motorverlustleistung $P_{Mot}$ kann zunächst das Drehzahlsignal 22 herangezogen werden. Außerdem wird die Motorspannung über das Motorspannungssignal 19 erfaßt. Im allgemeinen ist davon auszugehen, daß die Motorspannung eingeprägt ist und mit der Spannung $U_{Batt}$ der Energiequelle 12 übereinstimmt. Die Motorverlustleistung $P_{Mot}$ wird damit gemäß

$$P_{Mot} = (U_{Batt} - c \cdot \Phi \cdot n)^2 / R_A \qquad (1)$$

berechnet.

$R_A$ ist dabei der Widerstand der Ankerwicklung des Elektromotors 10 und $c \cdot \Phi$ die feldabhängige Induktionskonstante des Elektromotors 10. Diese läßt sich aus der Motorkennlinie gemäß

$$c \cdot \Phi = U_0 / n_0 \qquad (2)$$

berechnen, wobei
$n_0$ die Leerlaufdrehzahl des Elektromotors 10 und $U_0$ die Klemmenspannung des Elektromotors 10 im Leerlauf ist.

Die Motorverlustleistung $P_{Mot}$ wird nunmehr während der gesamten Einschaltdauer des Elektromotors 10 integriert. Der Integrationswert, der ein Maß für die thermische Belastung des Motors ist, wird in Abhängigkeit von der Einschaltdauer in Figur 2 dargestellt. Sobald der Integrationswert eine erste vorgegebene Schwelle $S_1$ zum Zeitpunkt $T_1$ erreicht, oder überschreitet, wird das Überlastsignal 26 generiert. Falls das vom Elektromotor 10 angetriebene bewegbare Teil nicht gerade zufällig seine Ruheposition angenommen hat, vergeht nach dem Zeitpunkt $T_1$ noch eine Zeit, bis der Zeitpunkt $T_2$ erreicht wird, bei dem der Elektromotor 10 mit dem Abschaltsignal 15 abgeschaltet wird. Das Erreichen des Zeitpunkts $T_2$ ist gleichbedeutend mit dem Erreichen der vorgegebenen Ruheposition des bewegbaren Teils. Da mit Abschalten des Elektromotors 10 ein Abkühlprozeß einsetzt, wird dieser Abkühlprozeß dadurch simuliert, daß der Integrationswert vom Abschaltzeitpunkt $T_2$ an vorzugsweise nach einer e-Funktion abgesenkt wird. Die Approximation mit einer e-Funktion approximiert den tatsächlichen Temperaturverlauf am besten. Erreicht der Integrationswert eine zweite vorgebene Schwelle $S_2$, so kann der Elektromotor 10 - soweit er nicht aus anderen Gründen abgeschaltet bleibt - wieder eingeschaltet werden und das vorstehend beschriebene Integrationsverfahren setzt erneut ein bis die erste Schwelle $S_1$ wieder erreicht ist und erneut das Überlastsignal 26 ausgegeben wird. Der Integrationsverlauf für den Fall, daß nach dem Erreichen der Schwelle $S_2$ zum Zeitpunkt $T_3$ der Elektromotor 10 unmittelbar wieder eingeschaltet wird, ist in Figur 2 strichliniert eingetragen. Zum Zeitpunkt $T_4$ hat das bewegbare Teil wieder seine vorgegebene Ruheposition erreicht und der Elektromotor 10 kann erneut abgeschaltet werden.

Die einzelnen Schritte zur Ermittlung des Überlastsignals 26 in der Überlastermittlung 25 werden in einer in der signalverarbeitenden Anordnung 14 integrierten Logik durchgeführt. Ein hardwaremäßiges Ausführungsbeispiel dieser Logik ist als Blockschaltbild in Figur 3 dargestellt.

Die Logik umfaßt einen Multiplizierer 36, zwei Subtrahierglieder 37, 38, einen Quadrierer 39, einen Dividierer 40, ein Integrierglied 41 und einen Komparator 42. Im Multiplizierer 16 wird das Drehzahlsignal 22 mit dem konstanten Faktor $c \cdot \Phi$ multipliziert. Dieses Produkt wird im ersten Subtrahierglied 37 von der Motorspannung $U_{Mot}$ subtrahiert und das Ergebnis im Quadrierer 39 quadriert. Das Differenzquadrat wird im Dividierer 40 durch die Konstante $R_A$ dividiert. Das Ausgangssignal des Dividierers 40 ist die Motorverlustleistung $P_{Mot}$. Dieses Signal wird über einen ersten Schalter 43 dem zweiten Subtrahierglied 38 zugeführt. Der Ausgang des zweiten Subtrahierglieds 38 liegt am Eingang des Integrierglieds 41, dessen Ausgang mit dem Eingang des Komparators 42 verbunden ist. Der beispielsweise als Fensterkomparator ausgebildete Komparator 42 verfügt über die zwei voreingestellten Schwellen $S_1$ und $S_2$. Der Ausgang des Integrierglieds 41 ist über einen zweiten Schalter 44 an den invertierenden Eingang des zweiten Subtrahierglieds 38 zurückgeführt. Die beiden Schalter 43, 44 werden synchron miteinander geschaltet, und zwar derart, daß mit Einschalten des Elektromotors 10 der erste Schalter 43 schließt und der zweite Schalter 44 öffnet und mit Abschalten des Elektromotors 10 durch das Abschaltsignal 15 oder durch eine anderweitige Schaltmaßnahme der zweite Schalter 44 schließt und der erste Schalter 43 an Null gelegt wird.

Mit Einschalten des Elektromotors 10 wird von den Bauelementen 36 bis 40 fortlaufend die Motorverlustleistung $P_{Mot}$ nach Gleichung (1) berechnet. Die Motorverlustleistung $P_{Mot}$ wird über den geschlossenen Schalter 43 unmittelbar an das Integrierglied 41 gelegt, da das zweite Subtrahierglied 38 wegen des geöffneten zweiten Schalters 44 funktionslos ist. Im Integrierglied 41 wird die Motorverlustleistung $P_{Mot}$ aufintegriert und der am Ausgang des Integrierglieds 41 anstehende Integrationswert dem Komparator 42 zugeführt. Übersteigt der Integrationswert die obere Schwelle $S_1$, so tritt am Ausgang des Komparators 42 das Überlastsignal 26 auf, unterschreitet der Integrationswert die Schwelle $S_2$, so nimmt der Komparator 42 das Überlastsignal 26 zurück.

Anstelle der Berechnung und Integration der Motorverlustleistung $P_{Mot}$ kann auch eine der Motorverlustleistung proportionale Größe in der beschriebenen Weise verarbeitet werden. Eine solche Größe ist beispielsweise die mit dem Ankerwiderstand $R_A$ multiplizierte Verlustleistung $P_{Mot}$ gemäß

$$(P_{Mot} \cdot R_A) = (U_{Mot} - c \cdot \Phi \cdot n)^2 \qquad (3)$$

In diesem Fall sind lediglich die Schwellen $S_1$ und $S_2$ im Komparator 44 entsprechend zu verändern, und zwar so, daß bei Erreichen der zulässigen Temperaturgrenze des Elektromotors 10 die proportionale Größe den Wert der oberen Schwelle $S_1$ erreicht. Auf den Dividierer 40 kann dann verzichtet werden.

Die Logik kann aus analogen Bauelementen aufgebaut werden, wird aber bevorzugt in Digitaltechnik ausgeführt. In diesem Fall wird die berechnete Motorverlustleistung $P_{Mot}$ in festen Zeitintervallen abgetastet und die Abtastwerte in einem Addierer oder Summenspeicher aufsummiert. Es kann aber auch die Motorverlustleistung $P_{Mot}$ in festen Zeitintervallen jeweils neu berechnet und die Rechenwerte aufsummiert werden. In beiden Fällen erhält man den Integrationswert, der mit den Schwellen $S_1$ und $S_2$ verglichen wird. Der Integrationswert simuliert die Temperatur des Elektromotors 10, so daß bei Erreichen oder Überschreiten der oberen Schwelle $S_1$ der Motor nach dem Erreichen der Ruheposition des bewegbaren Teils abgeschaltet wird, bevor er thermisch überbeansprucht wird.

Die Ermittlung der thermischen Überanspruchung ist nicht auf das vorstehend beschriebene Ausführungsbeispiel beschränkt. So läßt sich die Ermittlung der Überlastung nicht nur durch die hardwaremäßige Logik realisieren, sondern auch durch ein in der signalverarbeitenden Anordnung 14 integriertes Rechenprogramm, das die einzelnen Schritte durchführt.

Die Verwendung des Drehzahlsignals 22 des Elektromotors 10 zur Berechnung der Motorverlustleistung $P_{Mot}$ ist besonders vorteilhaft, da üblicherweise Verstellsysteme für das bewegbare Teil über einen entsprechenden Drehzahlgeber, beispielsweise einen Halleffektgeber verfügen und somit die Drehzahl ohne Zusatzaufwand zur Verfügung steht. Wird in bestimmten Verstellsystemen auf derartige Sensoren 21 verzichtet, so kann die Motorverlustleistung $P_{Mot}$ auch aufgrund des ermittelten Motorstromsignals 20 gemäß

$$P_{Mot} = I^2 \cdot R_A \qquad (4)$$

berechnet werden. Der Motorstrom I läßt sich in einfacher Weise mit dem Motorstromsensor 20a, vorzugsweise einem induktiven Geber, erfassen.

Anstelle der Verlustleistung kann auch eine dieser proportionalen Größe berechnet werden, beispielsweise die Größe $P_{Mot} \cdot R_A$, so daß zur Simulierung der Motortemperatur lediglich der gemessene Motorstrom I quadriert und integriert werden muß.

**Patentansprüche**

1. Elektromotorischer Antrieb mit einem Überlastungsschutz für den Elektromotor, mit einer Eingabe (18) zum Vorgeben einer Sollposition eines bewegbaren Teils und mit einer Überlastermittlung (25), die ein Überlastsignal (26) im Überlastfall abgibt, dadurch gekennzeichnet, daß die Überlastermittlung (25) die Überlastung des Elektromotors (10) aus der Motortemperatur ermittelt, daß im Überlastfall eine Sollpositionsänderung auf eine Ruheposition erfolgt und daß der Elektromotor (10) erst nach Erreichen der Ruheposition mit einem Abschaltsignal (15) abschaltbar ist.

2. Elektromotorischer Antrieb nach Anspruch 1, dadurch gekennzeichnet, daß die Überlastermittlung (25) wenigstens einen Drehzahlgeber (21) aufweist.

3. Elektromotorischer Antrieb nach Anspruch 1 oder 2, dadurch gekennzeichnet, daß die Motortemperatur mit wenigstens einem Temperaturfühler (23) erfaßt wird.

4. Elektromotorischer Antrieb nach Anspruch 1 bis 3, dadurch gekennzeichnet, daß die Temperatur des Elektromotors (10) aus der Verlustleistung ($P_{Mot}$) oder einer zu dieser proportionalen Größe anhand gemessener Motordaten ($U_{Mot}$, n) während der Einschaltdauer des Elektromotors (10) berechnet und integriert wird und daß zur Ermittlung des Überlastsignals (26) der Integrationswert mit einem vorgegebenen Schwellwert ($S_1$) verglichen wird.

5. Elektromotorischer Antrieb nach Anspruch 4, dadurch gekennzeichnet, daß die Motorverlustleistung ($P_{Mot}$) in festen Zeitintervallen berechnet und der Integrationswert durch aufsummierte Rechenwerte gewonnen wird.

6. Elektromotorischer Antrieb nach Anspruch 4, dadurch gekennzeichnet, daß bei einem an einer Gleichspannung betriebenen Elektromotor (10) dessen Drehzahl (n) gemessen und die Motorverlustleistung ($P_{Mot}$) gemäß

$$P_{Mot} = (U_{Mot} - c \cdot \Phi \cdot n)^2 / R_a$$

berechnet wird, wobei $R_A$ der Widerstand der Ankerwicklung, $c \cdot \Phi$ die feldabhängige Induktionskonstante und $U_{Mot}$ die Klemmenspannung des Elektromotors (10) ist.

7. Elektromotorischer Antrieb nach Anspruch 4, dadurch gekennzeichnet, daß bei einem an einem Gleichspannungsnetz betriebenen Elektromotor (10) dessen Drehzahl (n) gemessen und eine zur Motorverlustleistung ($P_{Mot}$) proportionale Größe ($P_{Mot} \cdot R_A$) gemäß

$$(P_{Mot} \cdot R_A) = (U_{Mot} - c \cdot \Phi \cdot n)^2$$

berechnet wird, wobei $U_{Mot}$ die Klemmenspannung und $c \cdot \Phi$ die feldabhängige Induktionskonstante des Elektromotors (10) ist.

8. Elektromotorischer Antrieb nach Anspruch 4, dadurch gekennzeichnet, daß bei einem an einem Gleichspannungsnetz betriebenen Elektromotor (10) dessen Motorstrom (I) gemessen und die Motorverlustleistung ($P_{Mot}$) gemäß

$$P_{Mot} = I^2 \cdot R_A$$

berechnet wird, wobei $R_A$ der Widerstand der Ankerwicklung des Elektromotors (10) ist.

9. Elektromotorischer Antrieb nach Anspruch 1, gekennzeichnet durch die Verwendung bei einem Verstellantrieb in einem Kraftfahrzeug.

**Claims**

1. Electric-motor drive with overload protection for the electric motor, having an input (18) for presetting a nominal position of a moving part and having overload determination (25) which emits an overload signal (26) in the event of an overload, characterized in that the overload determination (25) uses the motor temperature to determine whether the electric motor (10) is being overloaded, in that, in the event of an overload, a nominal position change takes place to a rest position, and in that the electric motor (10) cannot be switched off by a switch-off signal (15) until the rest position has been reached.

2. Electric-motor drive according to Claim 1, characterized in that the overload determination (25) has at least one rotation speed sensor (21).

3. Electric-motor drive according to Claims 1 or 2, characterized in that the motor temperature is detected by at least one temperature sensor (23).

4. Electric-motor drive according to Claims 1 to 3, characterized in that the temperature of the electric motor (10) is calculated from the power loss ($P_{Mot}$) or a variable proportional to this power loss using measured motor data ($U_{Mot}$, n) throughout the period when the electric motor (10) is switched on, and is integrated, and in that, in order to determine the overload signal (26), the integration value is compared with a preset threshold value ($S_1$).

5. Electric-motor drive according to Claim 4, characterized in that the motor power loss ($P_{Mot}$) is calculated at fixed time intervals, and the integration value is obtained by summed calculating values.

6. Electric-motor drive according to Claim 4, characterized in that, in the case of an electric motor (10) operated from a DC voltage, the rotation speed (n) of said motor is measured and the motor power loss ($P_{Mot}$) is calculated from

$$P_{Mot} = (U_{Mot} - c \bullet \Phi \bullet n)^2/R_a$$

where $R_A$ is the resistance of the armature winding, $c \bullet \Phi$ is the field-dependent induction constant and $U_{Mot}$ is the terminal voltage of the electric motor (10).

7. Electric-motor drive according to Claim 4, characterized in that, in the case of an electric motor (10) which is operated from a DC voltage power supply, the rotation speed (n) of said motor is measured and a variable ($P_{Mot} \bullet R_A$), proportional to the motor power loss ($P_{Mot}$) is calculated using

$$(P_{Mot} \bullet R_A) = (U_{Mot} - c \bullet \Phi \bullet n)^2$$

where $U_{Mot}$ is the terminal voltage and $c \bullet \Phi$ is the field-dependent induction constant of the electric motor (10).

8. Electric-motor drive according to Claim 4, characterized in that, in the case of an electric motor (10) which is operated from a DC voltage power supply, the motor current (I) of said motor is measured and the motor power loss ($P_{Mot}$) is calculated using

$$P_{Mot} = I^2 \bullet R_A$$

where $R_A$ is the resistance of the armature winding of the electric motor (10).

9. Electric-motor drive according to Claim 1, characterized by use for a positioning drive in a motor vehicle.

**Revendications**

1. Mécanisme d'entraînement, mû par un moteur électrique, avec une protection contre les surcharges du moteur électrique, avec une entrée de données (18) pour prédéfinir une position de consigne d'une pièce mobile et avec un dispositif de détection de surcharge (25), qui délivre un signal de surcharge (26) en cas de surcharge, caractérisé en ce que

- le dispositif de détection de surcharge (25) détecte la surcharge du moteur électrique (10) à partir de la température du moteur,
- en cas de surcharge a lieu une modification de la position de consigne sur une position de repos, et
- le moteur électrique (10) peut être débranché seulement quand la position de repos a été atteinte par un signal de débranchement (15).

2. Mécanisme d'entraînement mû par un moteur électrique selon la revendication 1, caractérisé en ce que le dispositif de détection de la surcharge présente au moins un détecteur de la vitesse de rotation (21).

3. Mécanisme d'entraînement mû par un moteur électrique selon l'une quelconque des revendications 1 ou 2, caractérisé en ce que la température du moteur est détectée par au moins un capteur de température (23).

4. Mécanisme d'entraînement mû par un moteur électrique selon la revendication 1 à 3, caractérisé en ce que

- la température du moteur électrique (10) est calculée et intégrée à partir de la perte de puissance du moteur $P_{Mot}$ ou d'une grandeur proportionnelle à celle-ci à partir de données mesurées du moteur ($U_{Mot}$, n), pendant la durée de branchement du moteur électrique (10) et
- pour déterminer le signal de surcharge (26) on compare la valeur de l'intégration à une valeur de seuil prédéfinie (S1).

5. Mécanisme d'entraînement mû par un moteur électrique selon la revendication 4, caractérisé en ce que l'on calcule la perte de puissance du moteur ($P_{Mot}$) à des intervalles fixes de temps et l'on obtient la valeur de l'intégration grâce aux valeurs de calcul additionnées.

6. Mécanisme d'entraînement mû par un moteur électrique selon la revendication 4, caractérisé en ce que dans le cas d'un moteur électrique (10) à courant continu on mesure sa vitesse de rotation (n) et on calcule la perte de puissance du moteur ($P_{Mot}$) selon l'équation suivante

$$P_{Mot} = (U_{Mot} - c \cdot \Phi \cdot n)^2/R_a$$

dans laquelle $R_A$ est la résistance de l'enroulement de l'induit, c.φ est la constante d'induction, fonction du champ, et $U_{Mot}$ est la tension aux bornes du moteur électrique (10).

7. Mécanisme d'entraînement mû par un moteur électrique selon la revendication 4, caractérisé en ce que dans le cas d'un moteur électrique (10) à courant continu on mesure sa vitesse de rotation (n) et on calcule une grandeur ($P_{Mot} + R_A$) proportionnelle à la perte de puissance du moteur ($P_{Mot}$) selon l'équation suivante :

$$(P_{Mot} \cdot R_A) = (U_{Mot} - c \cdot \Phi \cdot n)^2$$

dans laquelle $U_{Mot}$ est la tension aux bornes et c.f la constante d'induction, fonction du champ, du moteur électrique (10).

8. Mécanisme d'entraînement mû par un moteur électrique selon la revendication 4, caractérisé en ce que dans le cas d'un moteur électrique (10) à courant continu on mesure son intensité dans le moteur (I) et la perte de puissance du moteur ($P_{Mot}$) selon l'équation

$$P_{Mot} = I^2 \cdot R_A$$

dans laquelle $R_A$ est la résistance de l'enroulement de l'induit du moteur électrique (10).

9. Mécanisme d'entraînement mû par un moteur électrique selon la revendication 1, caractérisé par son utilisation dans le cas d'un mécanisme de réglage dans un véhicule à moteur.

Fig. 1

Fig. 2

Fig. 3